# EUROPEAN PATENT APPLICATION

(11) **EP 3 447 703 A1**
(43) Date of publication of application: **27.02.2019**
(21) Application number: 18190186.9
(22) Date of filing: 22.08.2018
(51) Int. Cl.: G06Q 20/20, G06Q 10/10, G06Q 30/00

(54) **COMMODITY SALES DATA PROCESSING APPARATUS AND CONTROL METHOD THEREFOR**

(30) Priority: 22.08.2017 JP 2017159249
(71) Applicant: Toshiba TEC Kabushiki Kaisha, Tokyo 141-8562 (JP)
(72) Inventor: MUTO, Makoto, Shinagawa-ku, Tokyo 141-8562 (JP)
(74) Representative: Takeuchi, Maya

(57) **Abstract**

In accordance with an embodiment, a commodity sales data processing apparatus includes a code reader, a connection interface connected to a printer, and a controller. The controller receives at least one employee data item from a server apparatus that stores employee data items regarding a plurality of employees. The controller generates, on the basis of the received at least one employee data item, code information that uniquely identifies an employee of the plurality of employees in the form of a code readable by the code reader. The controller outputs printable data including the generated code information (code) to the printer via the connection interface.

## Description

### FIELD

An embodiment described here generally relates to a commodity sales data processing apparatus and a control method therefor.

### BACKGROUND

In the related art, at a store including a point of sales (POS) terminal, a cashier performs sign-in by inputting an identification number such as an employee code into a keyboard in order to start operations of the POS terminal. Further, in recent years, a cashier performs sign-in by causing a barcode reader to read a barcode printed on a cashier's nameplate. The barcode includes an identification number that uniquely identifies the cashier.

However, it is necessary to use a dedicated printing apparatus in order to print barcodes on nameplates, and thus it takes time and cost for generating the nameplates.

### SUMMARY OF INVENTION

To solve the above-cited problems, there is provided a commodity sales data processing apparatus that registers commodity information of a commodity purchased by a customer at a store and performs settlement processing on the basis of the registered commodity information, the commodity sales data processing apparatus comprising:
a communication interface for communicating with a server apparatus that stores employee data items regarding a plurality of employees at the store;
a connection interface that is connected to a printer;
a code reader that reads a code; and
a controller that
   receives at least one employee data item of the employee data items from the server apparatus via the communication interface,
   generates, on the basis of the received at least one employee data item, code information that uniquely identifies an employee of the plurality of employees in the form of the code readable by the code reader,
   outputs the generated code information to the printer via the connection interface to cause the printer to print the generated code information,
   controls, when the employee tries to sign in to the commodity sales data processing apparatus, the code reader to read the code information printed by the printer, and
   permits the employee to sign in to the commodity sales data processing apparatus by using the fact that the employee data item including an employee number indicated by the read code information is prestored in the server apparatus as a condition.

Preferably, the employee data items may each include the employee number that identifies the employee, an employee name, and an operation privilege of the employee to operate the commodity sales data processing apparatus.

Preferably, the controller may
select an employee data item of the employee data items stored in the server apparatus, which is to be used for generating the code information, and
receive the selected employee data item from the server apparatus via the communication interface.

Preferably, the controller may
determine whether or not the employee permitted to sign in to the commodity sales data processing apparatus has a predetermined operation privilege to operate the commodity sales data processing apparatus, and
receive the at least one employee data item from the server apparatus via the communication interface by using the fact that the controller determines that the employee permitted to sign in to the commodity sales data processing apparatus has the predetermined operation privilege as a condition.

Preferably, the controller may
send the employee number indicated by the code information read by the code reader to the server apparatus via the communication interface,
receive a check result of the employee number from the server apparatus via the communication interface, and
determine whether or not the employee permitted to sign in to the commodity sales data processing apparatus has the predetermined operation privilege on the basis of the received check result.

Preferably, the controller may output printable data including the employee number and an employee name as well as the code information to the printer via the connection interface.

Preferably, the code information may be a Japanese article number code indicating the employee number.

Preferably, the controller may output printable data including the code information to the printer that prints the commodity information on a commodity label to be attached to a commodity to be sold at the store and issues the commodity label.

Preferably, the code reader may read the commodity information from the commodity label attached to the commodity to be purchased by the customer, and
the controller may register the commodity information read by the code reader.

In another exemplary embodiment, there is also provided a control method for a commodity sales data processing apparatus that registers commodity information of a commodity purchased by a customer at a store and performs settlement processing on the basis of the registered commodity information, the control method comprising:
receiving at least one employee data item from a server apparatus that stores employee data items regarding a plurality of employees at the store via a communication interface;
generating, on the basis of the received at least one employee data item, code information that uniquely identifies an employee of the plurality of employees in the form of a code readable by a code reader;
outputting the generated code information to a printer via the connection interface to cause the printer to print the generated code information;
controlling, when the employee tries to sign in to the commodity sales data processing apparatus, the code reader to read the code information printed by the printer; and
permitting the employee to sign in to the commodity sales data processing apparatus by using the fact that the employee data item including an employee number indicated by the read code information is prestored in the server apparatus as a condition.

Preferably the control method may further comprise:
selecting an employee data item of the employee data items stored in the server apparatus, which is to be used for generating the code information, and
receiving the selected employee data item from the server apparatus via the communication interface.

Preferably the control method may further comprise:
determining whether or not the employee permitted to sign in to the commodity sales data processing apparatus has a predetermined operation privilege to operate the commodity sales data processing apparatus, and
receiving the at least one employee data item from the server apparatus via the communication interface by using the fact that the controller determines that the employee permitted to sign in to the commodity sales data processing apparatus has the predetermined operation privilege as a condition.

Preferably the control method may further comprise:
sending the employee number indicated by the code information read by the code reader to the server apparatus via the communication interface,
receiving a check result of the employee number from the server apparatus via the communication interface, and
determining whether or not the employee permitted to sign in to the commodity sales data processing apparatus has the predetermined operation privilege on the basis of the received check result.

Preferably the control method may further comprise:
outputting printable data including the employee number and an employee name as well as the code information to the printer via the connection interface.

Preferably the control method may further comprise:
outputting printable data including the code information to the printer that prints the commodity information on a commodity label to be attached to a commodity to be sold at the store and issues the commodity label.

### BRIEF DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a diagram showing a schematic configuration of an employee code printing system according to an embodiment.
Fig. 2 is a hardware block diagram showing an example of a hardware configuration of a POS terminal apparatus according to the embodiment.
Fig. 3 is a hardware block diagram showing an example of a hardware configuration of a label printer according to the embodiment.
Fig. 4 is a hardware block diagram showing an example of a hardware configuration of a server apparatus according to the embodiment.
Fig. 5 is a functional block diagram showing an example of a functional configuration of the employee code printing system according to the embodiment.
Fig. 6 is a diagram showing an example of employee data items stored by the server apparatus according to the embodiment.
Fig. 7 is a diagram showing an example of a label obtained by printing one employee code on a sheet in the embodiment.
Fig. 8 is a diagram showing an example of a label obtained by printing a plurality of employee codes on a sheet in the embodiment.
Fig. 9 is a sequence diagram showing an example of a flow of representative processing performed by the employee code printing system according to the embodiment.
Fig. 10 is a flowchart showing an example of JAN code generation processing performed by a controller of the POS terminal apparatus according to the embodiment.
Fig. 11 is a flowchart showing an example of sign-in processing performed by the controller of the POS terminal apparatus according to the embodiment.

### DETAILED DESCRIPTION

In accordance with one embodiment, a commodity sales data processing apparatus registers commodity information of a commodity purchased by a customer at a store and performs settlement processing on the basis of the registered commodity information. The commodity sales data processing apparatus includes a communication interface, a connection interface, a code reader, and a controller. The communication interface is for communicating with a server apparatus that stores employee data items regarding a plurality of employees at the store. The connection interface is connected to a printer. The code reader reads a code. The controller receives at least one employee data item of the employee data items from the server apparatus via the communication interface. The controller generates, on the basis of the received at least one employee data item, code information that uniquely identifies an employee of the plurality of employees in the form of the code readable by the code reader. The controller outputs the generated code information to the printer via the connection interface to cause the printer to print the generated code information. The controller controls, when the employee tries to sign in to the commodity sales data processing apparatus, the code reader to read the code information printed by the printer. Moreover, the controller permits the employee to sign in to the commodity sales data processing apparatus by using the fact that the employee data item including an employee number indicated by the read code information is prestored in the server apparatus as a condition.

Hereinafter, an embodiment will be further described with reference to the drawings. In the drawings, identical symbols denote identical or similar parts.

### (Explanation of Schematic Configuration of Employee Code Printing System)

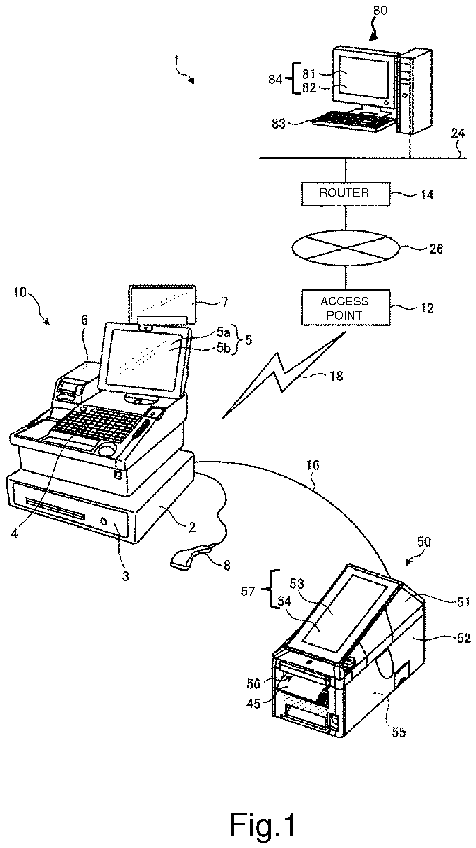

Fig. 1 is a diagram showing a schematic configuration of an employee code printing system 1. The employee code printing system 1 includes a POS terminal apparatus 10, a label printer 50, and a server apparatus 80 as shown in Fig. 1.

The POS terminal apparatus 10 is installed at a store such as a supermarket, for example. The POS terminal apparatus 10 performs registration processing of registering commodity information of a commodity or commodities purchased by a customer and settlement processing of the commodity or commodities registered in the registration processing. Further, the POS terminal apparatus 10 reads an employee data item of a selected employee from an employee data file 95 stored in the server apparatus 80. On the basis of the acquired employee data item, the POS terminal apparatus 10 generates code information that uniquely identifies the selected employee in the form of a code. For example, the code may be a barcode or may be QR code (registered trademark) or the like other than the barcode. Hereinafter, an example in which a barcode is used as the code will be described. The POS terminal apparatus 10 outputs printable data of the generated barcode (code information) to the label printer 50. In addition, the POS terminal apparatus 10 reads the code information from the barcode printed by the label printer 50. The POS terminal apparatus 10 permits the employee having the employee number indicated by the read code information to sign in to the POS terminal apparatus 10. Note that the POS terminal apparatus 10 is an example of a commodity sales data processing apparatus.

The label printer 50 prints the barcode including the code information of the employee on the basis of the printable data output from the POS terminal apparatus 10. Further, the label printer 50 issues a label on which a commodity code and the like indicating the commodity information are printed. The label is attached to the commodity. Note that the label printer 50 is an example of a printing means.

The server apparatus 80 is installed at the headquarters of the store or the like. The server apparatus 80 manages sales information of each store. Moreover, the server apparatus 80 stores employee data items including employee numbers, employee names, and operation privileges of employees. Further, the server apparatus 80 outputs an employee data item selected by the POS terminal apparatus 10 to the POS terminal apparatus 10.

### (Explanation of Schematic Configuration of POS Terminal Apparatus)

Next, a schematic configuration of the POS terminal apparatus 10 will be described with reference to Fig. 1. The POS terminal apparatus 10 is disposed on a drawer section 2 for the use. The drawer section 2 includes a drawer 3 that accommodates cash and the like. The POS terminal apparatus 10 controls open and close operations of the drawer 3.

The POS terminal apparatus 10 includes a keyboard 4, a display operation device 5 for the cashier, a receipt printer 6, a display device 7 for the customer, and a reader 8.

The keyboard 4 and the display operation device 5 for the cashier are user interfaces. The keyboard 4 is placed a front side of an upper surface of the POS terminal apparatus 10. The display operation device 5 for the cashier is placed on a deep side of the upper surface of the POS terminal apparatus 10.

The keyboard 4 forms a part of the input apparatus and includes a plurality of keys such as numeric keys, a clear key, a return key, a subtotal key, and a total key. The numeric keys are ten keys for inputting numerical values of a commodity code, an amount of money (hereinafter, simply referred to as amount), and the like. The clear key is a key for cancelling the operation in case of error occurrence or the like. The return key is a key for cancelling the current operation and returning to the previous screen of the display operation device 5 for the cashier. The subtotal key is a key for completing sales registration and starting calculation of total sales amount. The total key is a key to be pressed for confirming input contents and performing settlement processing.

The display operation device 5 for the cashier includes, for example, a display 5a such as a liquid crystal display (LCD) and a touch panel 5b stacked on a surface of the display 5a. The display 5a displays a screen depending on a processing state to the cashier when the registration processing, the settlement processing, or the like is to be performed. The touch panel 5b detects an operation (press) of the cashier with respect to a screen displayed on the display 5a, a button, or the like and controls the operation of the POS terminal apparatus 10 in accordance with a position at which the operation has been made.

The receipt printer 6 is placed on a left-hand side of the upper surface of the POS terminal apparatus 10. The receipt printer 6 prints the contents of the transaction on a receipt sheet and issues a receipt to be given to the customer. The receipt printer 6 issues the receipt through an issuing port (not shown) by conveying a rolled paper (not shown) (receipt sheet) installed inside with a roller rotationally driven by a pulse motor or the like. At this time, the receipt printer 6 prints the contents of the transaction on the rolled paper by the use of a thermal head (not shown), for example.

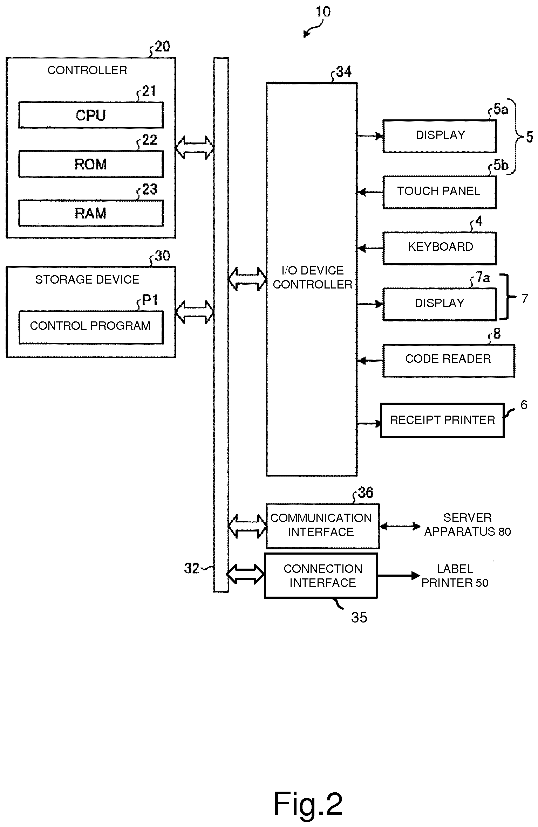

The display device 7 for the customer is a display 7a (see Fig. 2) such as an LCD, for example. The display device 7 for the customer is provided on the deep side of the upper surface of the POS terminal apparatus 10. The display device 7 for the customer is placed in such a manner that a display surface of the display 7a is oriented toward the customer. The display device 7 for the customer displays the name of the commodity registered by the POS terminal apparatus 10, the amount of the commodity, the total amount, and the like.

In addition, the reader 8 is connected to the POS terminal apparatus 10. The reader 8 reads, from the barcode printed on a label 45 attached to the commodity, code information included in this barcode. The reader 8 reads the code information included in the barcode (commodity code that identifies the commodity) by decoding light-receiving signals of the barcode. The reader 8 outputs the acquired code information to the CPU 21 (see Fig. 2) of the POS terminal apparatus 10.

### (Explanation of Schematic Configuration of Label Printer)

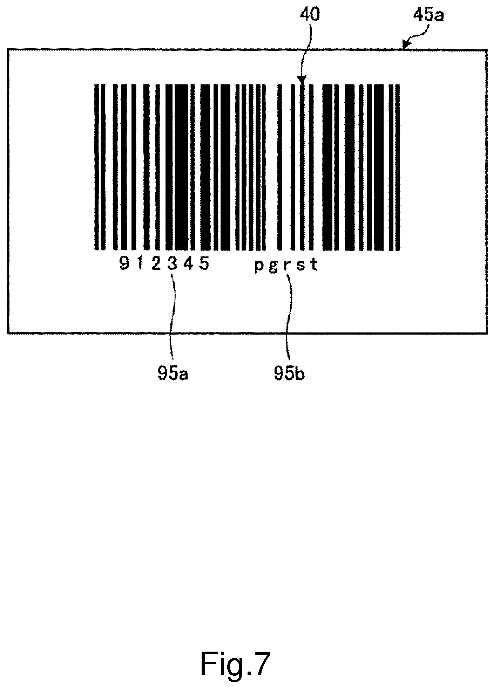

Next, a schematic configuration of the label printer 50 will be described with reference to Fig. 1. The label printer 50 includes an upper cover 51 and a main body cover 52. The upper cover 51 is provided with a display device 57. The display device 57 includes a display 53 such as an LCD and a touch panel 54 stacked on a surface of this display 53, for example. The label printer 50 includes an accommodation portion (not shown) that accommodates a roll-like label sheet inside the main body cover 52. When the upper cover 51 is opened, the storage portion is exposed from the main body cover 52 and is allowed to feed the label sheet. Further, the label printer 50 includes a printing device 55 inside the main body cover 52. The printing device 55 prints the commodity code and the like indicating the commodity information on the label sheet. As will be described later, the printing device 55 further prints the code information of the employee in the form of a barcode. The label printer 50 issues the label 45 and a label 45a (see Fig. 7) through a label issuing port 56 provided between the upper cover 51 and the main body cover 52. On the label 45, the commodity code and the like indicating the commodity information is printed by the printing device 55. On the label 45a, the code information of the employee is printed in the form of a barcode 40 (see Fig. 7).

Note that the label printer 50 is connected to the POS terminal apparatus 10 via a local area network (LAN) cable 16, for example. The LAN cable 16 may be wired or may be wireless.

### (Explanation of Schematic Configuration of Server Apparatus)

Next, a schematic configuration of the server apparatus 80 will be described with reference to Fig. 1. The server apparatus 80 includes a keyboard 83 and a display device 84. The display device 84 includes a display 81 such as an LCD and a touch panel 82 stacked on a surface of this display 81, for example.

The display 81 is a display means that displays a display screen of a management screen and the like of the employee code printing system 1 to an operator of the server apparatus 80. The touch panel 82 and the keyboard 83 are operation means to be operated (pressed) when the operator performs necessary operations on the employee code printing system 1.

The server apparatus 80 is connected to a router 14 via a LAN cable 24. The router 14 is connected to an access point 12 installed at the store via a network 26 such as the Internet or a virtual private network (VPN). The access point 12 and the POS terminal apparatus 10 are connected to each other via a wireless LAN 18 such as Wi-Fi (registered trademark).

### (Explanation of Hardware Configuration of POS Terminal Apparatus)

Next, a hardware configuration of the POS terminal apparatus 10 will be described with reference to Fig. 2. Fig. 2 is a hardware block diagram showing an example of a hardware configuration of the POS terminal apparatus 10. The POS terminal apparatus 10 includes a controller 20 for controlling the respective blocks. The controller 20 includes a central processing unit (CPU) 21, a read only memory (ROM) 22, and a random access memory (RAM) 23. The CPU 21 connects to the ROM 22 and the RAM 23 via internal buses (not shown) including an address bus and a data bus, which are provided inside the controller 20. The CPU 21 develops, in the RAM 23, various programs stored in the ROM 22 and a storage device 30. The CPU 21 operates in accordance with the various programs developed in the RAM 23 to thereby comprehensively control the POS terminal apparatus 10. That is, the controller 20 has a generally used computer configuration.

The controller 20 connects to the storage device 30, an I/O device controller 34, a connection interface 35, and a communication interface 36 via a bus line 32.

The storage device 30 is a nonvolatile memory such as a flash memory in which stored information is retained also when the power supply is off. The storage device 30 stores a program and the like including a control program P1. The control program P1 is a program for causing the POS terminal apparatus 10 to exert its function. Moreover, the storage device 30 stores a list of employee data items included in the employee data file 95, for example. The list of employee data items is updated by being sent from a server 80 at a predetermined timing, for example. The list of employee data items is a list of employee names and/or employee numbers included in a plurality of employee data items contained in the employee data file 95, for example. The storage device 30 further stores a commodity master file, a sales file, and the like (not shown). The POS terminal apparatus 10 uses these files when performing the above-mentioned registration processing and settlement processing. Note that the registration processing and the settlement processing are not main processing of this embodiment, and thus descriptions of the commodity master file and the sales file will be omitted.

The I/O device controller 34 connects the controller 20, the display operation device 5 for the cashier (display 5a and touch panel 5b), the keyboard 4, the display 7a, the receipt printer 6, the reader 8, and the like to one another. The I/O device controller 34 controls each of the connected peripheral devices (e.g., display operation device 5 for cashier, keyboard 4, display 7a, reader 8, receipt printer 6) on the basis of instructions from the controller 20. Note that the functions of the respective peripheral devices are as described above.

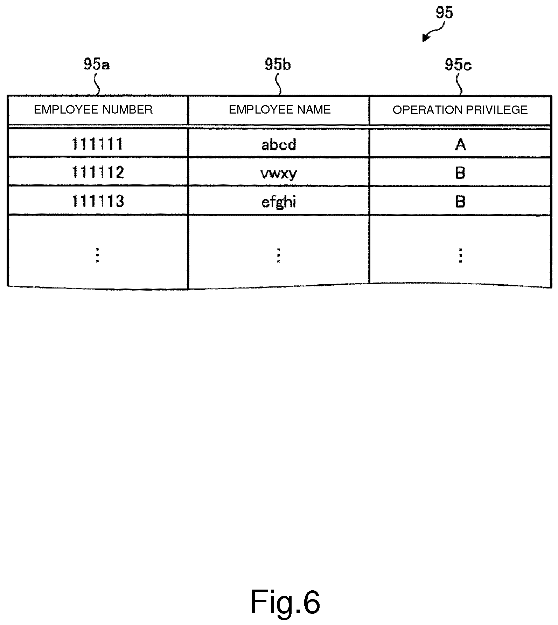

The connection interface 35 is an interface for connecting to the label printer 50 and outputting the printable data of the label 45 and the printable data of the label 45a (see Fig. 7) to the label printer 50. Specifically, for example, when causing the label printer 50 to issue the label 45a to be attached to the nameplate or the like, the controller 20 of the POS terminal apparatus 10 outputs the printable data of the barcode included in the code information that uniquely identifies the employee to the label printer 50 via the connection interface 35. Further, for example, when causing the label printer 50 to issue the label 45 to be attached to the commodity, the controller 20 of the POS terminal apparatus 10 outputs the printable data of the commodity code and the like indicating the commodity information to the label printer 50 via the connection interface 35. The communication interface 36 is an interface for communicating with the server apparatus 80. Specifically, the controller 20 of the POS terminal apparatus 10 communicates with the server apparatus 80 via the communication interface 36 and receives employee data items and the like included in the employee data file 95 (see Fig. 6) stored in the server apparatus 80.

### (Explanation of Hardware Configuration of Label Printer)

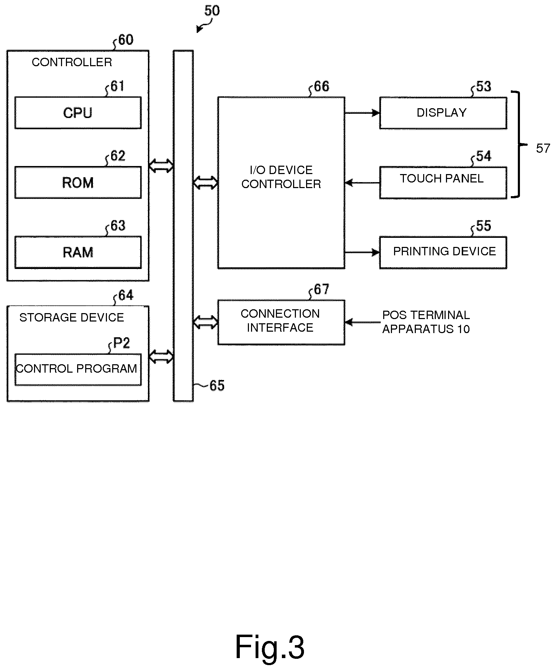

Next, a hardware configuration of the label printer 50 will be described. Fig. 3 is a hardware block diagram showing an example of a hardware configuration of the label printer 50. The label printer 50 includes a controller 60 for controlling the respective blocks. The controller 60 includes a CPU 61, a ROM 62, and a RAM 63. The CPU 61 connects to the ROM 62 and the RAM 63 via the internal buses (not shown) including the address bus and the data bus, which are provided inside the controller 60. The CPU 61 develops, in the RAM 63, various programs stored in the ROM 62 and a storage device 64. The CPU 61 operates in accordance with the various programs developed in the RAM 63 to thereby comprehensively control the label printer 50. That is, the controller 60 has a generally used computer configuration.

The controller 60 connects to the storage device 64, an I/O device controller 66, and a connection interface 67 via a bus line 65.

The storage device 64 is a nonvolatile memory such as a flash memory in which stored information is retained also when the power supply is off. The storage device 64 stores a program and the like including a control program P2. The control program P2 is a program for causing the label printer 50 to exert its functions.

The I/O device controller 66 connects the controller 60, the display device 57 (display 53 and touch panel 54), the printing device 55, and the like to one another. The I/O device controller 66 controls each of the connected peripheral devices (e.g., display 53, touch panel 54, printing device 55) on the basis of instructions from the controller 60. Note that the functions of the respective peripheral devices are as described above.

The connection interface 67 is an interface for connecting to the POS terminal apparatus 10 and inputting the printable data of the label 45 of the commodity and the printable data of the label 45a of the nameplate and the like from the POS terminal apparatus 10. Specifically, the controller 60 of the label printer 50 inputs the printable data of the barcode and the like including the code information that uniquely identifies the employee and the printable data of the commodity code and the like indicating the commodity information, from the POS terminal apparatus 10 via the connection interface 67.

### (Explanation of Hardware Configuration of Server Apparatus)

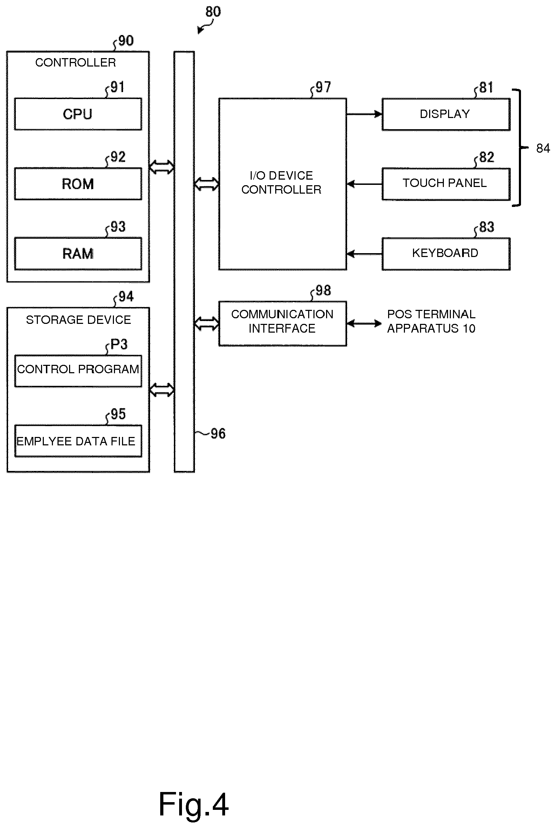

Next, a hardware configuration of the server apparatus 80 will be described with reference to Fig. 4. As shown in Fig. 4, the server apparatus 80 includes a controller 90 for controlling the respective blocks. The controller 90 includes a CPU 91, a ROM 92, and a RAM 93. The CPU 91 connects to the ROM 92 and the RAM 93 via the internal buses (not shown) including an address bus and a data bus, which are provided inside the controller 90. The CPU 91 develops, in the RAM 93, various programs stored in the ROM 92 and a storage device 94. The CPU 91 operates in accordance with the various programs developed in the RAM 93 to thereby comprehensively control the POS terminal apparatus 10. That is, the controller 90 has a generally used computer configuration.

The controller 90 connects to the storage device 94, an I/O device controller 97, and a communication interface 98 via a bus line 96.

The storage device 94 is a nonvolatile memory such as a flash memory in which stored information is retained also when the power supply is off. The storage device 94 stores a program and the like including a control program P3. The control program P3 is a program for causing the server apparatus 80 to exert its functions. Moreover, the storage device 94 stores the employee data file 95. The employee data file 95 includes data regarding a plurality of employees (employee data items). Details of the employee data file 95 will be described later.

The I/O device controller 97 connects to the controller 90, the display device 84 (display 81 and touch panel 82), the keyboard 83, and the like. The I/O device controller 97 controls each of the connected peripheral devices (e.g., display 81, touch panel 82, keyboard 83) on the basis of instructions from the controller 90. Note that the functions of the respective peripheral devices are as described above.

The communication interface 98 is an interface for communicating with the POS terminal apparatus 10. Specifically, the controller 90 of the server apparatus 80 communicates with the POS terminal apparatus 10 via the communication interface 98 and sends employee data items included in the employee data file 95 stored in the server apparatus 80 to the POS terminal apparatus 10.

Note that the employee code printing system 1 may further include other server apparatuses (not shown) connected to the LAN cable 24 in addition to the server apparatus 80. The server apparatus 80 may update the employee data file 95 by sending a new employee data file 95 to the other server apparatuses regularly (e.g., every morning). As will be described later, the POS terminal apparatus 10 accesses the employee data file 95 stored in the server apparatus 80. Therefore, there is a possibility that access from a plurality of POS terminal apparatuses 10 is concentrated on the server apparatus 80. In order to prevent such access concentration, the employee data file 95 may be distributed and stored in a plurality of server apparatuses.

### (Explanation of Functional Configuration of Employee Code Printing System)

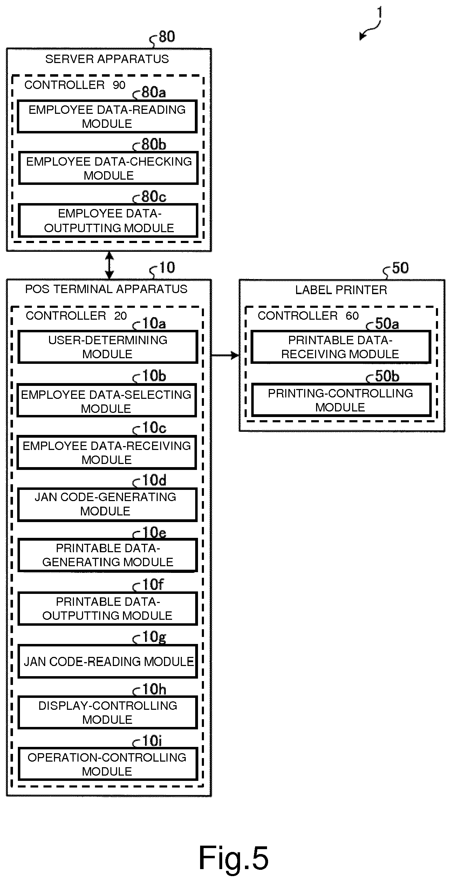

Next, a functional configuration of the employee code printing system 1 will be described. Fig. 5 is a functional block diagram showing an example of a functional configuration of the employee code printing system 1. Hereinafter, a functional configuration of each of the blocks constituting the employee code printing system 1 will be described.

### (Explanation of Functional Configuration of POS Terminal Apparatus)

In the POS terminal apparatus 10, the CPU 21 of the controller 20 reads the control program P1 stored in the storage device 30 and develops the read control program P1 in the RAM 23. The controller 20 generates the respective functional modules of the POS terminal apparatus 10 shown in Fig. 5 in the RAM 23 by operating in accordance with the control program P1. Specifically, the controller 20 realizes a user-determining module 10a, an employee data-selecting module 10b, an employee data-receiving module 10c, a JAN code-generating module 10d, a printable data-generating module 10e, a printable data-outputting module 10f, a JAN code-reading module 10g, a display-controlling module 10h, and an operation-controlling module 10i as the functional modules. Note that the controller 20 of the POS terminal apparatus 10 further functions as a commodity registration means and a settlement means (not shown). The controller 20 performs the registration processing by functioning as the commodity registration means. Further, the controller 20 performs the settlement processing by functioning as the settlement means.

The user-determining module 10a determines an operation privilege of an employee permitted to sign in to the POS terminal apparatus 10, the operation privilege being to operate the POS terminal apparatus 10. Specifically, the user-determining module 10a determines whether or not the sign-in is permitted by the JAN code-reading module 10g. When the user-determining module 10a determines that the sign-in is permitted by the JAN code-reading module 10g, the user-determining module 10a determines the operation privilege of the employee whose sign-in is permitted, on the basis of a check result received by the JAN code-reading module 10g from the server apparatus 80, for example. Note that the user-determining module 10a is an example of a determination means.

The employee data-selecting module 10b selects an employee data item of the employee data items stored in the server apparatus 80, which is to be used for generating the code information that uniquely identifies the employee. Specifically, when causing the label printer 50 or another printer to print the label to be attached to the nameplate or the like, the employee data-selecting module 10b causes the display 5a to display a list of employee data items included in the employee data file 95 in cooperation with the display-controlling module 10h, for example. The list of employee data items is displayed for viewing the employee data file 95.
Moreover, the employee data-selecting module 10b receives selection of the employee name included in the list of employee data items via the touch panel 5b by cooperating with the operation-controlling module 10i. Moreover, the employee data-selecting module 10b sends a transmission request of the employee data item as well as an employee number corresponding to the employee name the selection of which has been received, to the server apparatus 80 via the communication interface 36. Further, the employee data-selecting module 10b may receive the employee number directly input from the keyboard 4 and send, to the server apparatus 80, the transmission request of the employee data item as well as the received employee number by cooperating with the operation-controlling module 10i, for example.

The employee data-receiving module 10c receives the employee data item the selection of which has been received by the employee data-selecting module 10b, from the server apparatus 80. Specifically, the employee data-receiving module 10c receives the employee data item sent from the server apparatus 80 as a response of the transmission request of the employee data item from the employee data-selecting module 10b, for example, via the communication interface 36. Note that the employee data-receiving module 10c is an example of a reception means.

The JAN code-generating module 10d generates the code information that uniquely identifies the employee on the basis of the received employee data item. Specifically, the JAN code-generating module 10d generates a Japanese article number (JAN) code including the employee number in the form of the barcode 40 (see Fig. 7) as the code information that uniquely identifies the employee. The JAN code is a barcode standard in Japan, which is compatible with the European article number (EAN) code. Note that the JAN code-generating module 10d is an example of a generation means. Further, the code information including the employee number is not limited to the JAN code and may be code information independently set by an enterprise and a store. It should be noted that in order to perform the registration processing of the commodity, the POS terminal apparatus 10 originally has a function of reading the JAN code from the barcode 40 of the label attached to the commodity. Therefore, it is desirable that the JAN code be generated as the code information because the POS terminal apparatus 10 can use that function.

The printable data-generating module 10e generates the printable data of the employee code printed on the label 45a (see Fig. 7). The employee code includes the barcode generated by the JAN code-generating module 10d, the employee number, and the employee name.

The printable data-outputting module 10f outputs the printable data of the employee code which is generated by the printable data-generating module 10e, to the label printer 50 via the connection interface 35. Note that the printable data-outputting module 10f is an example of an output means.

The JAN code-reading module 10g controls the reader 8 to read the JAN code (code information) from the barcode 40 printed on the label 45a. Further, the JAN code-reading module 10g permits the sign-in to the POS terminal apparatus 10 by using the fact that the employee data item including the employee number indicated by the JAN code read by the reader 8 already exists in the employee data file 95 of the server apparatus 80 as a condition. Specifically, the JAN code-reading module 10g determines whether or not the JAN code is read from the barcode 40 of the label 45a by the reader 8. If the JAN code-reading module 10g determines that the JAN code is read, the JAN code-reading module 10g sends a check request as well as the employee number indicated by the read JAN code, for example, to the server apparatus 80 via the communication interface 36. The JAN code-reading module 10g receives the check result sent from the server apparatus 80 in response to the check request via the communication interface 36. If on the basis of the received check result, the JAN code-reading module 10g determines that the employee data item including the employee number indicated by the read JAN code exists in the employee data file 95 of the server apparatus 80, the JAN code-reading module 10g permits the sign-in to the POS terminal apparatus 10. Note that the JAN code-reading module 10g is an example of a reading means.

The display-controlling module 10h causes the display 5a to display various types of information.

The operation-controlling module 10i detects that the touch panel 5b or the keyboard 4 is operated, and transfers operation information corresponding to the operation contents to the respective functional modules of the controller 20 shown in Fig. 5.

### (Explanation of Functional Configuration of Label Printer)

In the label printer 50, the CPU 61 of the controller 60 reads the control program P2 stored in the storage device 64 and develops the read control program P2 in the RAM 63. The controller 60 generates the respective functional modules of the label printer 50 shown in Fig. 5 in RAM 63 by operating in accordance with the control program P2. Specifically, the controller 60 realizes a printable data-receiving module 50a and a printing-controlling module 50b as the functional modules.

The printable data-receiving module 50a receives the printable data of the employee code sent by the printable data-outputting module 10f of the POS terminal apparatus 10 (controller 20) via the connection interface 67.

The printing-controlling module 50b controls the operation of the label printer 50 such that the label printer 50 prints the printable data of the employee code received by the printable data-receiving g module 50a. That is, by being controlled by the printing-controlling module 50b, the label printer 50 prints the employee code (barcode 40, employee number 95a, and employee name 95b) on the label 45a on the basis of the printable data and issues this label 45a.

### (Explanation of Functional Configuration of Server Apparatus)

In the server apparatus 80, the CPU 91 of the controller 90 reads the control program P3 stored in the storage device 94 and develops the read control program P3 in the RAM 93. The controller 90 generates the respective functional modules of the server apparatus 80 shown in Fig. 5 in the RAM 93 by operating in accordance with the control program P3. Specifically, the controller 90 realizes an employee data-reading module 80a, an employee data-checking module 80b, and an employee data-outputting module 80c as the functional modules.

The employee data-reading module 80a reads the employee data item the selection of which has been received by the employee data-selecting module 10b of the POS terminal apparatus 10, from the employee data file 95 stored in the storage device 94 of the server apparatus 80. Specifically, the employee data-reading module 80a receives the transmission request of the employee data item which is sent from the employee data-selecting module 10b, via the communication interface 98. The employee data-reading module 80a reads the employee data item including the employee number received as well as the transmission request, from the employee data file 95 stored in the storage device 94.

The employee data-checking module 80b checks the employee number of the operator who tries to sign in to the POS terminal apparatus 10 against the employee data file 95. Further, the employee data-checking module 80b determines the operation privilege of the employee having the matching employee number to operate the POS terminal apparatus 10. Specifically, the employee data-checking module 80b receives the check request sent by the JAN code-reading module 10g, for example, via the communication interface 98. The employee data-checking module 80b checks the employee number (employee number that is check target) received as well as the check request against the employee data file 95 stored in the storage device 94. That is, the employee data-checking module 80b determines whether or not the employee data item including the employee number that is the check target exists in the employee data file 95 of the storage device 94. If the employee data item including the employee number that is the check target exists in the employee data file 95 of the storage device 94, the employee data-checking module 80b determines, on the basis of this employee data item, the operation privilege of the employee having the employee number that is the check target to operate the POS terminal apparatus 10. Moreover, the employee data-checking module 80b sends the check result to the POS terminal apparatus 10 via the communication interface 98 as a response to the check request from the POS terminal apparatus 10 (JAN code-reading module 10g). The check result includes a determination result as to whether or not the employee data item including the employee number that is the check target exists in the employee data file 95 of the storage device 94. Moreover, the check result includes information regarding the operation privilege of the employee having the employee number that is the check target to operate the POS terminal apparatus 10, the check target being determined on the basis of the employee data item including the employee number that is the check target. Note that the contents of the employee data file 95 will be described later.

The employee data-outputting module 80c outputs the employee data item read by the employee data-reading module 80a to the POS terminal apparatus 10. Specifically, the employee data-outputting module 80c sends the employee data item read by the employee data-reading module 80a to the POS terminal apparatus 10 via the communication interface 98, as a response to the transmission request of the employee data item from the POS terminal apparatus 10 (employee data-selecting module 10b).

### (Explanation of Employee Data Items)

Next, the contents of the employee data items will be described. Fig. 6 is a diagram showing an example of the employee data items in the employee data file 95 stored in the storage device 94 of the server apparatus 80. The employee data file 95 is a data file including data regarding a plurality of employees of employees of all stores, who are permitted to sign in to the POS terminal apparatus 10, for example. Each employee data item in the employee data file 95 includes information regarding the employee number 95a, a name 95b, an operation privilege 95c of the employee to operate the POS terminal apparatus 10, and the like.

The employee number 95a is an identification number that uniquely identifies an employee. In the example of Fig. 6, the employee number 95a is a six-digit numerical value, for example.

The name 95b indicates an employee name.

The operation privilege 95c is information indicating an operation privilege of each employee to operate the POS terminal apparatus 10. In the example of Fig. 6, the operation privilege 95c is expressed as alphabet letters A, B, .... Each alphabet letter indicates a range of operation privilege. For example, the operation privilege A indicates that an operation privilege for all operations that can be performed at the POS terminal apparatus 10 is given to an employee. Further, the operation privilege B indicates that an operation privilege excluding a privilege to view the employee data file 95 is given to an employee.

### (Explanation of Printing Example of Employee Code)

Next, a printing example of the employee code will be described with reference to Fig. 7. Fig. 7 is a diagram showing an example of the label 45a obtained by printing one employee code on a label sheet.

The employee code printed on the label 45a includes the barcode 40, the employee number 95a, and the employee name 95b. The barcode 40 is a JAN code including the employee number 95a. Note that, by the employee number 95a and the employee name 95b being printed on the label 45a as well as the barcode 40, it is possible to prevent the employee indicated by this label 45a from being wrongly provided with a label 45a of another employee when the label 45a on which the barcode 40 is printed is passed to the employee indicated by this label 45a.

Note that the label 45a is printed by the label printer 50 on a label sheet without a liner, for example. Therefore, the label 45a on which the employee code is printed can be attached to the nameplate of the corresponding employee or the like as it is.

When the employee tries to sign in to the POS terminal apparatus 10, the employee brings the reader 8 (see Fig. 1) close to the barcode 40 of the label 45a to thereby cause the reader 8 to read the barcode 40.

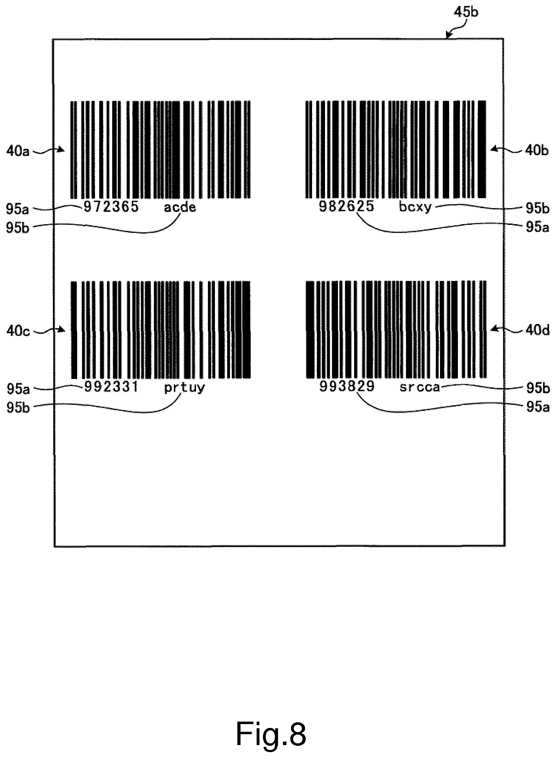

Next, another printing example of the employee code will be described with reference to Fig. 8. Fig. 8 is a diagram showing an example of a label 45b obtained by printing a plurality of employee codes on a sheet. The plurality of employee codes include barcodes 40a, 40b, 40c, 40d, employee numbers 95a, and employee names 95b, respectively.

In the employee code printing system 1, the label 45b is obtained by printing the employee codes by another printer (not shown) connected to the employee code printing system 1 instead of the label printer 50 shown in Fig. 1. On the label 45b, the employee numbers 95a of the respective employees and the respective employee names 95b are printed as well as the barcodes 40a, 40b, 40c, 40d including the employee number of the respective employees. The employee numbers 95a of the respective employees and the respective employee names 95b are printed at positions adjacent to the respective barcodes 40a, 40b, 40c, 40d.

The label 45b is obtained by printing the employee codes on an A4-size label sheet, for example. After printing of the employee codes, the label 45b is separated for each employee code of the employee and passed to each employee. In a case where there are a large number of employees whose employee codes are to be printed, printing by the other printer is efficient rather than printing by the label printer 50.

Note that the printable data-outputting module 10f of the POS terminal apparatus 10 (controller 20) has a function of recognizing whether the label printer 50 is connected to the POS terminal apparatus 10 or the other printer is connected to the POS terminal apparatus 10. Then, the printable data-outputting module 10f outputs the printable data of the employee code in a format depending on the type of the connected printer. That is, in a case where the label printer 50 is connected to the POS terminal apparatus 10, the printable data-outputting module 10f outputs the printable data of the employee code to the label printer 50 in the format shown in Fig. 7. On the other hand, in a case where the other printer is connected to the POS terminal apparatus 10, the printable data-outputting module 10f outputs the printable data of the employee code to the other printer in the format shown in Fig. 8.

### (Explanation of Sequence of Processing Performed by Employee Code Printing System 1)

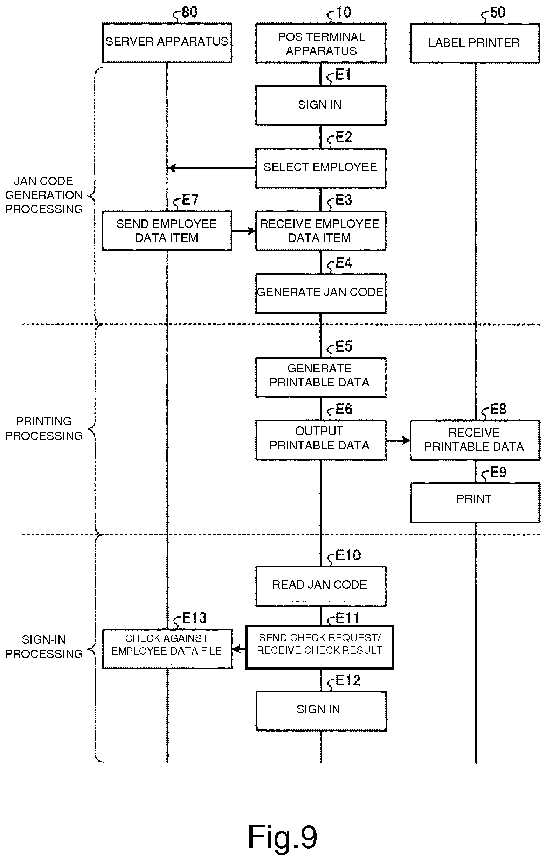

Next, a flow of processing performed by the employee code printing system 1 will be described. Fig. 9 is a sequence diagram showing an example of a flow of processing performed by the employee code printing system 1. Hereinafter, a flow of processing of JAN code generation processing, printing processing, and sign-in processing that are representative processing performed by the employee code printing system 1 will be described.

### (Explanation of Sequence of JAN Code Generation Processing)

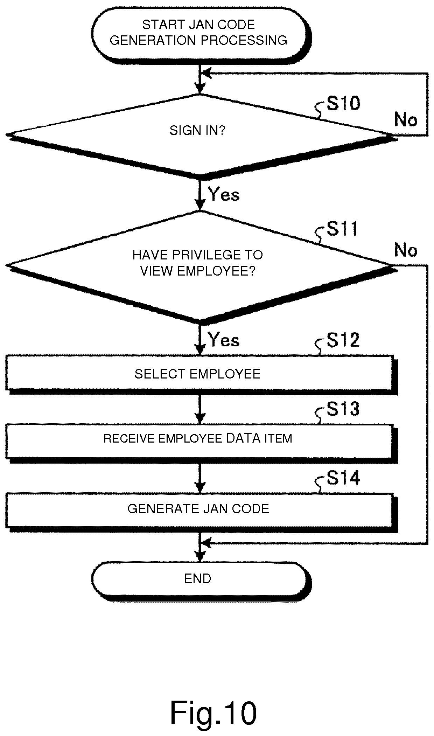

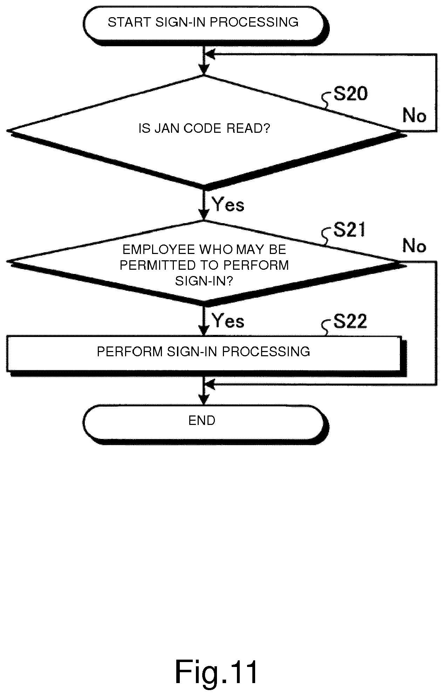

First of all, a flow of the JAN code generation processing will be described. It is assumed that an operator (e.g., cashier) having an operation privilege to view the employee data file 95 stored in the server apparatus 80 signs in to the POS terminal apparatus 10. That is, in Event E1 of the POS terminal apparatus 10, the JAN code-reading module 10g of the controller 20 performs processing (see Fig. 11) of Step S22 to be described later to thereby permit the sign-in of the cashier and the user-determining module 10a performs processing (see Fig. 10) of Step S11 to be described later to thereby determine that the operation privilege of the cashier includes the viewing privilege.

Next, the cashier views the employee data file 95 on the display 5a of the POS terminal apparatus 10 and selects an employee whose employee code is to be printed. That is, in Event E2 of the POS terminal apparatus 10, the employee data-selecting module 10b of the controller 20 performs processing (see Fig. 10) of Step S12 to be described later to thereby send a transmission request of the employee data item to the server apparatus 80 as well as the employee number of the employee name of the employee the selection of which has been received.

In Event E7, the server apparatus 80 sends the employee data item of the employee the selection of which has been received, to the POS terminal apparatus 10. That is, when the transmission request of the employee data item is sent from the POS terminal apparatus 10 to the server apparatus 80, the employee data-reading module 80a reads, from the employee data file 95 stored in the storage device 94, the employee data item including the employee number received as well as the transmission request. Moreover, the employee data-outputting module 80c sends the read employee data item to the POS terminal apparatus 10 as a response to the transmission request. Then, in Event E3 of the POS terminal apparatus 10, the employee data-receiving module 10c performs processing (see Fig. 10) of Step S13 to be described later to thereby receive the employee data item sent from the server apparatus 80.

In Event E4 of the POS terminal apparatus 10, the JAN code-generating module 10d performs processing (see Fig. 10) of Step S14 to be described later to thereby generate a JAN code (code information) indicating the employee number on the basis of the received data in the form of the barcode 40.

### (Explanation of Sequence of Printing Processing)

Next, a flow of the printing processing will be described. In Event E5 of the POS terminal apparatus 10, the printable data-generating module 10e adds the employee number 95a and the employee name 95b to the generated barcode 40 to thereby generate the printable data of the employee code. Note that the printable data-generating module 10e generates the printable data in a format depending on whether the label printer 50 is connected to the POS terminal apparatus 10 or the other printer (printer other than label printer 50) is connected to the POS terminal apparatus 10.

Next, in Event E6 of the POS terminal apparatus 10, the printable data-outputting module 10f outputs the printable data of the employee code to the label printer 50 (or the other printer).

In Event E8 of the label printer 50 (or the other printer), the printable data-receiving module 50a receives the printable data of the employee code sent from the POS terminal apparatus 10. Then, in Event E9 of the label printer 50, the printing-controlling module 50b prints the employee code on the basis of the received printable data.

### (Explanation of Sequence of Sign-in Processing)

Next, a flow of the sign-in processing will be described. First of all, the operator who tries to sign in to the POS terminal apparatus 10 brings the reader 8 close to the barcode 40 (JAN code) of the label 45a in order to cause the reader 8 to read the barcode 40 (JAN code) of the label 45a attached to the nameplate or the like. In Event E10 of the POS terminal apparatus 10, the JAN code-reading module 10g performs the processing (see Fig. 11) of Step S20 to be described later to thereby determine whether or not the JAN code is read.

In Event E11 of the POS terminal apparatus 10, the JAN code-reading module 10g performs processing (see Fig. 11) of Step S21 to be described later to thereby send a check request to the server apparatus 80 on the basis of the employee number indicated by the JAN code read by the reader 8.

Next, in Event E13 of the server apparatus 80, the employee data-checking module 80b checks the employee number that is the check target against the employee data file 95 in order to determine whether or not the employee number that is the check target exists in the employee data file 95. That is, the employee data-checking module 80b receives the check request sent by the JAN code-reading module 10g. The employee data-checking module 80b checks the employee number (employee number that is check target) received as well as the check request against the employee data file 95 stored in the storage device 94. That is, the employee data-checking module 80b determines whether or not the employee data item including the employee number that is the check target exists in the employee data file 95 of the storage device 94. Moreover, the employee data-checking module 80b sends a check result to the POS terminal apparatus 10 via the communication interface 98 as a response to the check request from the POS terminal apparatus 10. The sent check result includes a determination result as to whether or not the employee data item including the employee number that is the check target exists in the employee data file 95 of the storage device 94.

In Event E11 of the POS terminal apparatus 10, the JAN code-reading module 10g further performs the processing (see Fig. 11) of Step S21 to be described later to thereby determine whether or not the employee data item including the employee number that is a sign-in target exists in the employee data file 95 on the basis of the check result. If the JAN code-reading module 10g determines that the employee data item including the employee number that is the sign-in target exists in the employee data file 95, then in Event E12 of the POS terminal apparatus 10, the JAN code-reading module 10g performs the processing (see Fig. 11) of Step S22 to be described later to thereby perform the sign-in processing.

### (Explanation of Flow of JAN Code Generation Processing)

Next, a detailed flow of the JAN code generation processing will be described. Fig. 10 is a flowchart showing an example of the JAN code generation processing performed by the controller 20 of the POS terminal apparatus 10.

In Step S10 of Fig. 10, the user-determining module 10a of the controller 20 determines whether or not the sign-in processing (see Step S22 of Fig. 11) is performed. If the user-determining module 10a of the controller 20 determines that the sign-in processing is performed (Yes in Step S10), the processing of the controller 20 proceeds to Step S11. On the other hand, if the user-determining module 10a of the controller 20 determines that the sign-in processing is not performed (No in Step S10), the controller 20 repeats Step S10 until timeout expires. When timeout expires, the controller 20 terminates the JAN code generation processing.

In Step S11, the user-determining module 10a of the controller 20 determines whether or not the employee having the employee number indicated by the JAN code read by the reader 8 has an operation privilege to view the employee data file 95. That is, the user-determining module 10a determines the operation privilege of the employee permitted to perform sign-in on the basis of the check result received by the JAN code-reading module 10g from the server apparatus 80. If the user-determining module 10a of the controller 20 determines that the employee having the employee number indicated by the JAN code has the operation privilege to view the employee data file 95 (Yes in Step S11), the processing of the controller 20 proceeds to Step S12. On the other hand, the user-determining module 10a of the controller 20 determines that the employee having the employee number indicated by the JAN code does not have the operation privilege to view the employee data file 95 (No in Step S11), the controller 20 terminates the JAN code generation processing.

In Step S12, the employee data-selecting module 10b selects the employee that is a printing target of the label 45 in accordance with an operation of the operator (employee) who is permitted to sign in to the POS terminal apparatus 10. That is, the employee data-selecting module 10b causes the display 5a to display the list of employee data items included in the employee data file 95. Then, the employee data-selecting module 10b receives selection of the employee name included in the list of employee data items via the touch panel 5b. Moreover, the employee data-selecting module 10b sends a transmission request of the employee data item to the server apparatus 80 via the communication interface 36 as well as the employee number corresponding to the employee name the selection of which has been received.

In Step S13, the employee data-receiving module 10c of the controller 20 receives, from the server apparatus 80, the employee data item of the employee having the employee name the selection of which has been received in Step S12. That is, the employee data-receiving module 10c receives the employee data item sent from the server apparatus 80 as a response to the transmission request of the employee data item.

In Step S14, the JAN code-generating module 10d of the controller 20 generates a JAN code indicating the employee number in the form of the barcode 40 on the basis of the received employee data item. After that, the controller 20 terminates the JAN code generation processing.

### (Explanation of Flow of Sign-in Processing)

Next, a detailed flow of the sign-in processing will be described. Fig. 11 is a flowchart showing an example of a flow of the sign-in processing performed by the POS terminal apparatus 10.

In Step S20 of Fig. 11, the JAN code-reading module 10g of the controller 20 determines whether or not the JAN code printed on the label 45a in the form of the barcode 40 is read by the reader 8. If the JAN code-reading module 10g of the controller 20 determines that the JAN code is read by the reader 8 (Yes in Step S20), the processing of the controller 20 proceeds to Step S21. On the other hand, if the JAN code-reading module 10g of the controller 20 determines that the JAN code is not read by the reader 8 (No in Step S20), the controller 20 repeats the processing of Step S20 until timeout expires. When timeout expires, the controller 20 terminates the sign-in processing.

In Step S21, the JAN code-reading module 10g of the controller 20 determines whether or not the employee data item including the employee number (employee number that is sign-in target) indicating the JAN code read by the reader 8 exists in the employee data file 95 by the use of the employee data-checking module 80b of the server apparatus 80. That is, the JAN code-reading module 10g sends a check request to the server apparatus 80 as well as the employee number that is the sign-in target. Then, the JAN code-reading module 10g receives the check result sent from the server apparatus 80 as a response to the check request. The JAN code-reading module 10g determines whether or not the employee data item including the employee number that is the sign-in target exists in the employee data file 95 on the basis of the received check result. In other words, the JAN code-reading module 10g determines whether or not the operator who tries to perform sign-in is an employee who may be permitted to perform sign-in on the basis of the received check result. If the JAN code-reading module 10g determines that the employee data item including the employee number that is the sign-in target exists in the employee data file 95 (Yes in Step S21), the processing of the controller 20 proceeds to Step S22. On the other hand, if the JAN code-reading module 10g determines that the employee data item including the employee number that is the sign-in target does not exist in the employee data file 95 (No in Step S21), the controller 20 terminates the sign-in processing.

In Step S22, the controller 20 performs the sign-in processing. That is, the JAN code-reading module 10g of the controller 20 permits the operator having the employee number that is the sign-in target to sign in to the POS terminal apparatus 10. After that, the controller 20 terminates the sign-in processing.

As described above, in accordance with the POS terminal apparatus 10 (commodity sales data processing apparatus) of the embodiment, the employee data-receiving module 10c (reception means) of the controller 20 selects and receives at least one employee data item from the server apparatus 80 that stores the employee data file 95 of the plurality of employee data items including the employee numbers, the employee names, and the operation privileges of the employees. Then, the JAN code-generating module 10d (generation means) of the controller 20 generates the code information that uniquely identifies the employee on the basis of the received employee data item. The printable data-outputting module 10f (output means) of the controller 20 outputs the generated code information to the label printer 50 (printing means). Then, the JAN code-reading module 10g (reading means) of the controller 20 reads the code information printed by the label printer 50 on the label 45a and permits the employee having the employee number indicated by the code information to sign in to the POS terminal apparatus 10 by using the fact that the employee data item including the employee number indicated by the read code information exists in the employee data file 45, i.e., prestored as a condition. Therefore, the barcode used when signing in the POS terminal apparatus 10 can be easily generated.

Further, the controller 20 of the POS terminal apparatus 10 of the embodiment operates the employee data-receiving module 10c by using the fact that the user-determining module 10a (determining means) of the controller 20 determines that the employee who has signed in the POS terminal apparatus 10 has a predetermined privilege as a condition. Therefore, only the employee having the operation privilege can view the employee data file 95, and hence the security can be enhanced.

Then, the printable data-outputting module 10f of the POS terminal apparatus 10 (controller 20) of the embodiment outputs the printable data of the employee code including the code information (JAN code), the employee number, and the employee name, to the label printer 50. Therefore, it is possible to print the code information in the form of the barcode and to print the employee number and the employee name. Thus, it is possible to prevent erroneous distribution when the labels 45a on which the code information is printed are distributed to the employees.

In addition, in the POS terminal apparatus 10 of the embodiment, the code information is the JAN code. Therefore, the original function of the POS terminal apparatus 10 of reading the commodity code or the like in order to perform commodity registration can be used also for reading the code information.

Further, in the POS terminal apparatus 10 of the embodiment, the printable data-outputting module 10f of the controller 20 outputs the code information to the label printer 50. Therefore, the label 45a including the code information of the employee can be issued by using only equipment originally provided at the store.

For example, in this embodiment, the printer (printing means) is connected to the commodity sales data processing apparatus and the code information that uniquely identifies the employee (JAN code indicating employee number) is printed. However, this embodiment does not need to be limited thereto. For example, the printer (printing means) may be connected to the server apparatus and the code information that uniquely identifies the employee may be printed by this printer. Thus, it becomes possible to perform printing by the originally provided equipment, not by a dedicated device or the like.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A commodity sales data processing apparatus that registers commodity information of a commodity purchased by a customer at a store and performs settlement processing on the basis of the registered commodity information, the commodity sales data processing apparatus comprising:
a communication interface for communicating with a server apparatus that stores employee data items regarding a plurality of employees at the store;
a connection interface that is connected to a printer;
a code reader that reads a code; and
a controller that
receives at least one employee data item of the employee data items from the server apparatus via the communication interface,
generates, on the basis of the received at least one employee data item, code information that uniquely identifies an employee of the plurality of employees in the form of the code readable by the code reader,
outputs the generated code information to the printer via the connection interface to cause the printer to print the generated code information,
controls, when the employee tries to sign in to the commodity sales data processing apparatus, the code reader to read the code information printed by the printer, and
permits the employee to sign in to the commodity sales data processing apparatus by using the fact that the employee data item including an employee number indicated by the read code information is prestored in the server apparatus as a condition.

2. The commodity sales data processing apparatus according to claim 1, wherein
the employee data items each include the employee number that identifies the employee, an employee name, and an operation privilege of the employee to operate the commodity sales data processing apparatus.

3. The commodity sales data processing apparatus according to claim 1 or 2, wherein
the controller
selects an employee data item of the employee data items stored in the server apparatus, which is to be used for generating the code information, and
receives the selected employee data item from the server apparatus via the communication interface.

4. The commodity sales data processing apparatus according to any one of claims 1 to 3, wherein
the controller
determines whether or not the employee permitted to sign in to the commodity sales data processing apparatus has a predetermined operation privilege to operate the commodity sales data processing apparatus, and
receives the at least one employee data item from the server apparatus via the communication interface by using the fact that the controller determines that the employee permitted to sign in to the commodity sales data processing apparatus has the predetermined operation privilege as a condition.

5. The commodity sales data processing apparatus according to claim 4, wherein
the controller
sends the employee number indicated by the code information read by the code reader to the server apparatus via the communication interface,
receives a check result of the employee number from the server apparatus via the communication interface, and
determines whether or not the employee permitted to sign in to the commodity sales data processing apparatus has the predetermined operation privilege on the basis of the received check result.

6. The commodity sales data processing apparatus according to any one of claims 1 to 5, wherein
the controller outputs printable data including the employee number and an employee name as well as the code information to the printer via the connection interface.

7. The commodity sales data processing apparatus according to claim 6, wherein
the code information is a Japanese article number code indicating the employee number.

8. The commodity sales data processing apparatus according to any one of claims 1 to 7, wherein
the controller outputs printable data including the code information to the printer that prints the commodity information on a commodity label to be attached to a commodity to be sold at the store and issues the commodity label.

9. The commodity sales data processing apparatus according to claim 8, wherein
the code reader reads the commodity information from the commodity label attached to the commodity to be purchased by the customer, and
the controller registers the commodity information read by the code reader.

10. A control method for a commodity sales data processing apparatus that registers commodity information of a commodity purchased by a customer at a store and performs settlement processing on the basis of the registered commodity information, the control method comprising:
receiving at least one employee data item from a server apparatus that stores employee data items regarding a plurality of employees at the store via a communication interface;
generating, on the basis of the received at least one employee data item, code information that uniquely identifies an employee of the plurality of employees in the form of a code readable by a code reader;
outputting the generated code information to a printer via the connection interface to cause the printer to print the generated code information;
controlling, when the employee tries to sign in to the commodity sales data processing apparatus, the code reader to read the code information printed by the printer; and
permitting the employee to sign in to the commodity sales data processing apparatus by using the fact that the employee data item including an employee number indicated by the read code information is prestored in the server apparatus as a condition.

11. The control method according to claim 10, further comprising:
selecting an employee data item of the employee data items stored in the server apparatus, which is to be used for generating the code information, and
receiving the selected employee data item from the server apparatus via the communication interface.

12. The control method according to claim 10 or 11, further comprising:
determining whether or not the employee permitted to sign in to the commodity sales data processing apparatus has a predetermined operation privilege to operate the commodity sales data processing apparatus, and
receiving the at least one employee data item from the server apparatus via the communication interface by using the fact that the controller determines that the employee permitted to sign in to the commodity sales data processing apparatus has the predetermined operation privilege as a condition.

13. The control method according to claim 12, further comprising:
sending the employee number indicated by the code information read by the code reader to the server apparatus via the communication interface,
receiving a check result of the employee number from the server apparatus via the communication interface, and
determining whether or not the employee permitted to sign in to the commodity sales data processing apparatus has the predetermined operation privilege on the basis of the received check result.

14. The control method according to any one of claims 10 to 13, further comprising:
outputting printable data including the employee number and an employee name as well as the code information to the printer via the connection interface.

15. The control method according to any one of claims 10 to 14, further comprising:
outputting printable data including the code information to the printer that prints the commodity information on a commodity label to be attached to a commodity to be sold at the store and issues the commodity label.
